(19) Europäisches Patentamt

European Patent Office

Office européen des brevets

(11) EP 1 708 493 A2

(12) EUROPEAN PATENT APPLICATION

(43) Date of publication:
04.10.2006 Bulletin 2006/40

(51) Int Cl.:
H04N 5/21 (2006.01)

(21) Application number: 06112119.0

(22) Date of filing: 31.03.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 31.03.2005 JP 2005104985

(71) Applicant: Pioneer Corporation
Meguro-ku,
Tokyo (JP)

(72) Inventors:
• Okumichi, Kenji
c/o Pioneer Corporation
Ohta-ku, Tokyo (JP)
• Kawaguchi, Hirofumi
Pioneer Corporation
Nakakoma-gun, Yamanashi (JP)
• Honda, Hirofumi
c/o Pioneer Corporation
Nakakoma-gun, Yamanashi (JP)

(74) Representative: Viering, Jentschura & Partner
Steinsdorfstrasse 6
80538 München (DE)

(54) **Signal processing apparatus, signal processing method, and noise reducing apparatus**

(57) A signal processing device (14) outputs a (n+m)-bit return signal. A random number addition device (15) generates an m-bit random number, and adds this number to the return signal. A round-down device (16) rounds down the lower m bits of the return signal with the random number added. While such a process is repeated for the same pixels in a video image by several frames, the frequency of a carry caused by the random number addition corresponds to a numerical value shown by the lower m bits rounded down. As a result, the number of bits of the return signal is changed to n bits by the round-down process. However, information about the lower m bits rounded down is divided in a time direction and added to a video output signal.

FIG. 1

**Description**

BACKGROUND OF THE INVENTION

1. Field of the Invention

The present invention relates to a signal processing apparatus and a signal processing method, which can be applied to a recursive type filter apparatus or a recursive type noise reducing apparatus or the like.

2. Description of the Related Art

In most cases, a frame recursive type noise reducing apparatus is mounted on an apparatus which treats a digital video signal, such as a video recording / reproducing apparatus and a television receiver.
The frame recursive type noise reducing apparatus is an apparatus for reducing noise included in a video signal by using a correlation between the frames of the video signal. The frame recursive type noise reducing apparatus has an IIR (Infinite Impulse Response) filter structure. The frame recursive type noise reducing apparatus stores the video signal in a previous frame (i.e., a frame which is one frame prior to a current frame) into a frame buffer; performs subtraction of the video signal in the previous frame obtained from the frame buffer and the video signal in the current frame; multiplies a difference signal obtained by the subtraction, by a noise reduction coefficient; and adds the signal obtained by the multiplication to the video signal in the current frame. The video signal in the current frame obtained by this processes is stored into the frame buffer, and is used for a noise reducing process for the video signal in a next frame. The noise reduction coefficient is set in accordance with the motion amount of a video image detected by a motion detection circuit.
For example, if the video signal in the current frame is $S_n$, the video signal in the previous frame is $S_{n-1}$, and the noise reduction coefficient is k (k<1), the output signal $S_{out}$ of the frame recursive type noise reducing apparatus is expressed by the following equation (1).

$$S_{out} = S_n + k \cdot (S_{n-1} - S_n) = (1-k) \cdot S_n + k \cdot S_{n-1} \qquad (1)$$

By the way, the frame recursive type noise reducing apparatus has the following problems.
Namely, in the frame recursive type noise reducing apparatus, in order to increase a noise reduction effect and prevent a reduction in video resolution caused by the noise reducing process as much as possible, it is desirable to faithfully reflect the result of the operation or calculation according to the equation (1), into the output signal. However, if the operation of the equation (1) is performed for the video signal in the current frame and the operation result is faithfully reflected into the output signal, the number of digits of the output signal (the number of digits including decimal places) increases, and thus, the number of bits of the output signal also increases. Therefore, it is necessary to increase the bus width of a signal line (data bus) for transmitting the output signal in the noise reducing apparatus. At the same time, it is also necessary to increase the scale of the bit structure of the frame buffer and an operation element or the like which constitute the noise reducing apparatus. Moreover, it is also necessary to expand the bit structure or the bus width of a subsequent circuit for receiving the output signal of the noise reducing apparatus. As a result, the scales of the noise reducing apparatus and the subsequent circuit increase, which may cause problems, such as a reduction in processing speed, an increase in electricity consumption, an increase in circuit substrate areal size, and an increase in manufacturing cost.
In order to prevent the increase in circuit scale, the following method can be considered. Namely, after the operation of multiplying the difference signal between the video signal in the previous frame and the video signal in the current frame by the noise reduction coefficient, the lower bits of the signal obtained by this operation are rounded down. Then, the signal which the lower bits are rounded down is added to the video signal in the current frame. For example, if the video signal (input signal) in the current frame is n bits and the signal obtained by the operation of multiplying the difference signal by the noise reduction coefficient is (n+m) bits, then, the lower m bits of the (n+m) bit signal are rounded down, to thereby convert the number of bits of this signal from (n+m) bits to n bits. According to this method, it is possible to equalize the number of bits of the output signal of the noise reducing apparatus and the number of bits of the input signal thereof. Therefore, it is unnecessary to increase the bus width of the signal line for transmitting the output signal, the frame buffer, the operation element, the subsequent circuit, or the like, so that it is possible to prevent the increase in circuit scale.
According to this method, however, because of the round-down process of the lower bits, the result of the operation according to the equation (1) is no longer faithfully reflected into the output signal. As a result, it is difficult to sufficiently increase the noise reduction effect of the frame recursive type noise reducing apparatus, or to sufficiently prevent the reduction in video resolution caused by the noise reducing process.

On the other hand, if the motion amount of the video image is highly accurately detected by the motion detection circuit, and the detection result is highly accurately reflected into a noise reduction coefficient k, as a result of the operation of the equation (1), it is possible to realize the noise reducing process which highly accurately responds to the motion of the video image, so that it is possible to increase the noise reduction effect and an effect of preventing the reduction in video resolution. However, if the above-mentioned round-down process of the lower bits is performed, the noise reduction coefficient k is substantially rounded down. As a result, an effect of the highly accurate motion detection performed by the motion detection circuit is not reflected into the noise reducing process, and it is hardly possible to increase the noise reduction effect and the effect of preventing the reduction in video resolution.

Such a problem may occur not only in the frame recursive type noise reducing apparatus but also in a common IIR filter.

## SUMMARY OF THE INVENTION

It is therefore a first object of the present invention to provide a signal processing apparatus, a signal processing method, and a noise reducing apparatus, which can highly accurately reflect an effect to be realized by signal processing, into the signal obtained by the signal processing, while the number of bits of the signal obtained by the signal processing is reduced.

It is a second object of the present invention to provide a signal processing apparatus, a signal processing method, and a noise reducing apparatus, which can increase the noise reduction effect and the effect of preventing the reduction in video resolution while the bus width of the signal line in the circuit for performing the noise reproducing process or the subsequent circuit to which the output signal is supplied is reduced.

The above object of the present invention can be achieved by a first signal processing apparatus provided with: a signal processing device for performing signal processing for an n-bit output signal (n is an integer) and for outputting an (n+m)-bit intermediate signal (m is an integer); a random number adding device for adding a random number which is m bits or less, to the intermediate signal outputted from the signal processing device; a rounding-down device for converting the number of bits of the intermediate signal from (n+m) bits to n bits, by rounding down a lower m bits of the intermediate signal to which the random number is added by the random number adding device; and an adding device for adding the intermediate signal with the number of bits converted by the rounding-down device and an n-bit input signal, and for outputting an n-bit output signal.

The above object of the present invention can be also achieved by a second signal processing apparatus provided with: a signal processing device for performing signal processing for an n-bit output signal (n is an integer) and for outputting an (n+m)-bit intermediate signal (m is an integer); a bit-number converting device for converting the number of bits of the intermediate signal from (n+m) bits to n bits, by selectively performing either a round-up process or a round-down process for a lower m bits of the intermediate signal outputted from the signal processing device, in accordance with an execution pattern; and an adding device for adding the intermediate signal with the number of bits converted by the bit-number converting device and an n-bit input signal, and for outputting an n-bit output signal, the bit-number converting device provided with an execution pattern generating device for generating the execution pattern to determine whether the round-up process is performed or the round-down process is performed, the execution pattern generating device determining a ratio of the number of times of execution of the round-up process and the number of times of execution of the round-down process in the execution pattern, such that the ratio varies depending on a numerical value shown by the lower m bits of the intermediate signal outputted from the signal processing device.

The above object of the present invention can be also achieved by a first signal processing method provided with: a signal processing process of performing signal processing for an n-bit output signal (n is an integer) and of outputting an (n+m)-bit intermediate signal (m is an integer); a random number adding process of adding a random number which is m bits or less, to the intermediate signal outputted in the signal processing process; a rounding-down process of converting the number of bits of the intermediate signal from (n+m) bits to n bits, by rounding down a lower m bits of the intermediate signal to which the random number is added in the random number adding process; and an adding process of adding the intermediate signal with the number of bits converted in the rounding-down process and an n-bit input signal, and of outputting an n-bit output signal.

The above object of the present invention can be also achieved by a second signal processing method provided with: a signal processing process of performing signal processing for an n-bit output signal (n is an integer) and of outputting an (n+m)-bit intermediate signal (m is an integer); a bit-number converting process of converting the number of bits of the intermediate signal from (n+m) bits to n bits, by selectively performing either a round-up process or a round-down process for a lower m bits of the intermediate signal outputted in the signal processing process, in accordance with an execution pattern; and an adding process of adding the intermediate signal with the number of bits converted in the bit-number converting process and an n-bit input signal, and of outputting an n-bit output signal, the bit-number converting process provided with an execution pattern generating process of generating the execution pattern to determine whether the round-up process is performed or the round-down process is performed, the execution pattern generating process determining a ratio of the number of times of execution of the round-up process and the number of times of execution of the round-down process in the execution pattern, such that the ratio varies depending on a numerical value shown by the lower m bits of the intermediate signal outputted in the signal processing process.

The above object of the present invention can be also achieved by a computer program product in a computer-readable medium for tangibly embodying a program of instructions executable by a computer, to make the computer function as the above-mentioned first or second signal processing apparatus of the present invention (including its various aspects).

The above object of the present invention can be also achieved by a noise reducing apparatus, provided with the above-mentioned first or second signal processing apparatus (including its various aspects) and performing a noise reducing process by using the signal processing apparatus.

BRIEF DESCRIPTION OF THE DRAWINGS

FIG. 1 is a circuit diagram showing a noise reducing apparatus which is a first embodiment of the present invention;

FIG. 2 is an explanatory view showing the signal processing of the noise reducing apparatus in FIG. 1;

FIG. 3 is a graph showing a relationship between a return signal before a round-down process and the return signal after the round-down process, immediately after a noise reducing process is performed for an input video signal by one frame;

FIG. 4 is a graph showing a relationship between the return signal before a round-down process and the return signal after the round-down process, after the noise reducing process is repeated for the input video signal by several frames;

FIG. 5 is a graph showing a relationship between noise reduction intensity and degree of an actual noise reduction effect;

FIG. 6 is a circuit diagram showing a noise reducing apparatus which is a second embodiment of the present invention;

FIG. 7 is an explanatory view showing the signal processing of the noise reducing apparatus in FIG. 6;

FIG. 8 is an explanatory view showing one example of an execution pattern table;

FIG. 9 is a circuit diagram showing a filter apparatus which is another embodiment of the present invention; and

FIG. 10 is a circuit diagram showing a filter apparatus which is another embodiment of the present invention.

DETAILED DESCRIPTION OF THE PREFERRED EMBODIMENTS

Hereinafter, the embodiments of the present invention will be discussed with reference to the drawings.

(First Embodiment)

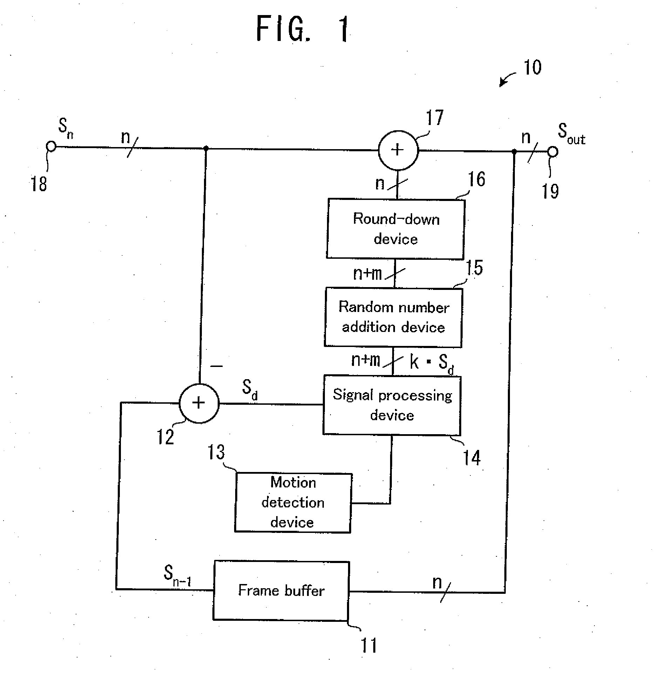

FIG. 1 shows a noise reducing apparatus which is the first embodiment of the signal processing apparatus and the signal processing method of the present invention. A noise reducing apparatus 10 in FIG. 1 is the frame recursive type noise reducing apparatus and an apparatus for reducing noise included in a video signal by using a correlation between the frames of the video signal. The noise reducing apparatus 10 is provided with: a frame buffer 11; operation devices 12 and 17; a motion detection device 13; a signal processing device 14; a random number addition device 15; and a round-down device 16. The frame buffer 11 is constructed from a storage element, such as a semiconductor memory, and can store therein the video signal by one frame. Each of the motion detection device 13 and the signal processing device 14 is constructed from a processing unit and a storage element, such as a semiconductor memory. The random number addition device 15 is constructed from a random number generation circuit and a processing unit or the like. The round-down device 16 is constructed from a processing unit or the like.

A flow of the noise reproducing process of the noise reducing apparatus 10 is as follows. Namely, a video signal $S_{n-1}$ in a previous frame (i.e., a frame which is one frame prior to a current frame) is stored in the frame buffer 11. This video signal $S_{n-1}$ is an n-bit digital signal. Now, if an input video signal $S_n$ in the current frame, which is an n-bit digital signal, is inputted to an input terminal 18, the operation device 12 performs the subtraction of the input video signal $S_n$ and the video signal $S_{n-1}$, and outputs an n-bit difference signal $S_d$ obtained by the subtraction to the signal processing device 14. On the other hand, the motion detection device 13 detects the motion amount of a video image corresponding to the video signal, and outputs a control signal which indicates the motion amount to the signal processing device 14. The signal processing device 14 sets a noise reduction coefficient k according to the motion amount of the video image, on the basis of the control signal outputted from the motion detection device 13. Moreover, the signal processing device 14 multiplies the difference signal $S_d$ by the noise reduction coefficient k, and outputs a return signal $(k \cdot Sd)$ obtained by the multiplication to the random number addition device 15. The multiplication of the difference signal $S_d$ and the noise reduction coefficient k, performed in the signal processing device 14, increases the number of bits of the return signal $(k \cdot S_d)$, to be (n+m) bits. Then, the random number addition device 15 generates an m-bit random number $S_{rn}$, and adds the random number $S_{rn}$ to the return signal $(k \cdot S_d)$. Then, the round-down device 16 rounds down the lower m bits of the return signal $(k \cdot S_d)$ with the random number $S_{rn}$ added. As a result, the number of bits of the return signal $(k \cdot S_d)$ becomes n bits. Then, the operation device 17 adds the n-bit return signal $(k \cdot Sd)$ outputted from the round-down device 16 and the n-bit input video signal $S_n$, and outputs the n-bit signal obtained by the addition, as an output video signal $S_{out}$, to an output terminal 19 and the frame buffer 11. The frame buffer 11 stores therein the n-bit output video signal $S_{out}$. The above-mentioned noise reducing process is expressed by the above-mentioned equation (1).

The noise reducing apparatus 10 repeats the noise reducing process for the input video signal $S_n$ in the current frame, for each pixel. If the signal processing for the input video signal $S_n$ in the current frame is ended, then, the noise reducing apparatus 10 performs the same noise reducing process for an input video signal in a next frame. In this manner, the noise reducing apparatus 10 repeats the noise reducing process over a plurality of frames which constitute the input video signal $S_n$. By repeating such a noise reducing process, the addition (i.e., feedback) of the return signal $(k \cdot S_d)$ to the input video signal $S_n$ is repeated over the plurality of frames, to thereby reduce the noise included in the input video signal $S_n$.

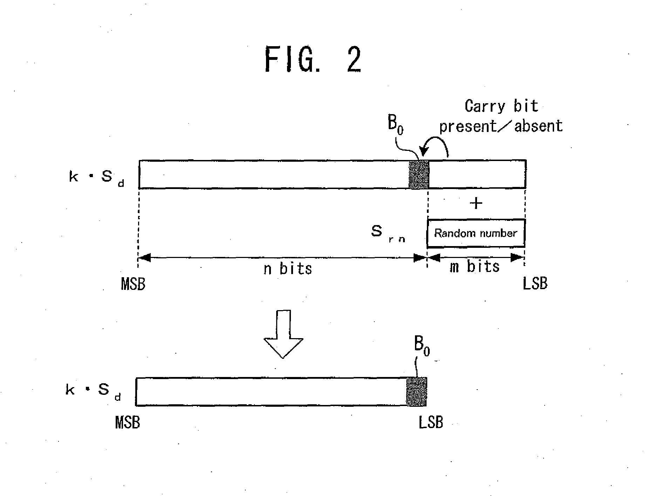

FIG. 2 shows the process of the random number addition device 15 and the round-down device 16. As shown in FIG. 2, the random number addition device 15 adds the m-bit random number $S_{rn}$ to the (n+m) bit return signal $(k \cdot S_d)$. At this time, a carry occurs, depending on the value of the lower m bits of the return signal $(k \cdot S_d)$ and the value of the random number $S_{rn}$. The frequency of the carry varies depending on the value of the lower m bits of the return signal $(k \cdot S_d)$. Then, the frequency of the carry is substantially in proportion to the value of the lower m bits of the return signal $(k \cdot S_d)$. Namely, if the value of the lower m bits of the return signal $(k \cdot Sd)$ is small, the frequency of the carry is low. That is because the carry does not occur if the value of the random number is not large, and thus, a range of the random number which causes the carry is narrow. In other words, the probability of occurrence of the random number which causes the carry is low. On the other hand, if the value of the lower m bits of the return signal $(k \cdot S_d)$ is large, the frequency of the carry is high. That is because the carry occurs even if the value of the random number is small, and thus, the range of the random number which causes the carry is wide. In other words, the probability of occurrence of the random number which causes the carry is high.

If the noise reducing process is repeatedly performed over the plurality of frames which constitute the input video signal $S_n$, the noise reducing process is repeated for the same pixel. Namely, the addition (i.e., feedback) of the return signal $(k \cdot S_d)$ to the input video signal $S_n$ is repeated for the same pixel. Along with this, the random number adding process is repeated by the random number addition device 15 for the same pixel. While the random number adding process is repeated for the same pixel, the carry caused by the random number addition occurs at a frequency which is substantially in proportion to the value of the lower m bits of the return signal $(k \cdot S_d)$. Namely, as shown in FIG. 2, 1 is added to a bit Bo which is the lowest bit of the return signal $(k \cdot S_d)$ obtained after the lower m bits are rounded down, at the frequency which is substantially in proportion to the value of the lower m bits of the return signal $(k \cdot S_d)$. By this, information about the lower m bits of the return signal $(k \cdot S_d)$ is divided in a time direction and added (fed back) to the input video signal $S_n$, for the same pixel. Therefore, after the addition (feedback) of the return signal $(k \cdot S_d)$ to the input video signal $S_n$ is repeated for the same pixel, information about the lower m bits of the return signal $(k \cdot S_d)$ which have been rounded down is included in the output video signal $S_{out}$. As a result, the information about the lower m bits of the return signal $(k \cdot S_d)$ which have been rounded down is reflected into the noise reducing process. Thus, although the return signal $(k \cdot Sd)$ is rounded down to n bits and added to the input video signal $S_n$, it is possible to obtain the noise reduction effect with substantially the same accuracy as in the case where the (n+m)-bit return signal $(k \cdot S_d)$ is added to the input video signal $S_n$ without rounding.

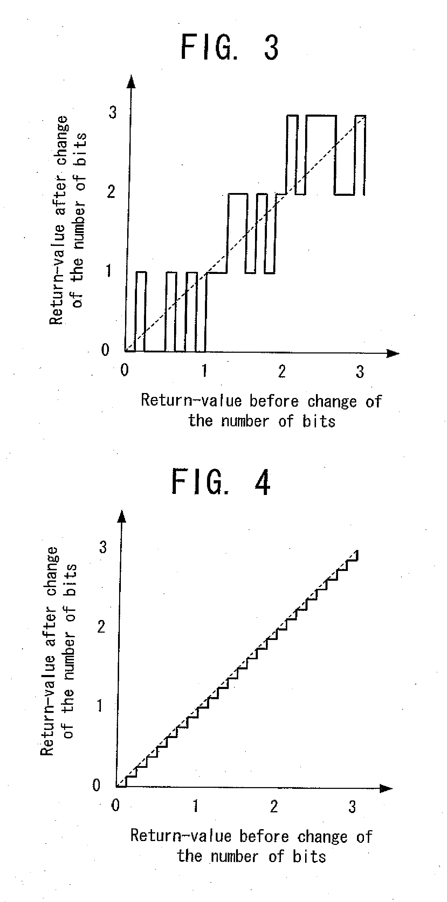

FIG. 3 shows a relationship between return signal $(k \cdot S_d)$ before the round-down process and the return signal $(k \cdot Sd)$ after the round-down process, immediately after the noise reducing process is performed for the input video signal $S_n$ by one frame. Immediately after the noise reducing process is performed for the input video signal $S_n$ by one frame, the random number addition is performed by the random number addition device 15 only once for each pixel. Thus, if the carry occurs due to the random number addition, the return signal $(k \cdot S_d)$ after the round-down process increases by 1. However, if the carry does not occur due to the random number addition, there is no increase in the return signal $(k \cdot S_d)$ after the round-down process. As a result, as shown in FIG. 3, a significant difference can be seen between the return signal $(k \cdot S_d)$ before the number of bits is changed and the return signal $(k \cdot Sd)$ after the number of bits is changed.

On the other hand, FIG. 4 shows a substantial relationship between return signal $(k \cdot S_d)$ before the round-down process and the return signal $(k \cdot S_d)$ after the round-down process, after the noise reducing process is repeated for the input video signal $S_n$ by several frames. After the noise reducing process is repeated for the input video signal $S_n$ by

several frames, the random number addition is performed by the random number addition device 15 several times for each pixel. Thus, the carry caused by the random number addition occurs at the frequency corresponding to the value of the lower m bits of the return signal $(k \cdot S_d)$. As a result, as the output video signal $S_{out}$ is viewed in a time direction, the information about the lower m bits of the return signal $(k \cdot S_d)$ which have been rounded down is divided in the time direction and added to the output video signal $S_{out}$. Therefore, as shown in FIG. 4, the return signal $(k \cdot S_d)$ before the number of bits is changed has substantially the same value as that of the return signal $(k \cdot S_d)$ after the number of bits is changed.

As explained above, the noise reducing apparatus 10 adds the m-bit random number $S_{rm}$ to the lower m bits of the return signal $(k \cdot Sd)$, and then, rounds down the lower m bits of the return signal $(k \cdot S_d)$. By this, while the number of bits of the return signal $(k \cdot S_d)$ is reduced from (n+m) bits to n bits, it is possible to divide the information about the lower m bits of the return signal $(k \cdot S_d)$ which have been rounded down, in the time direction, and to include the information in the output video signal $S_{out}$. Thus, according to the noise reducing apparatus 10, the following two effects can be realized, simultaneously.

Firstly, by rounding down the lower m bits of the return signal $(k \cdot S_d)$ and reducing the number of bits of the return signal $(k \cdot S_d)$, it is possible to narrow the bus width of a most part in the noise reducing apparatus 10. Specifically, as shown in FIG. 1, it is possible to set the bus width of a signal line for connecting the operation device 17 and the frame buffer 11, the bus width of a signal line for connecting the frame buffer 11 and the operation device 12, and the bus width of a signal line which runs from the operation device 17 to the output terminal 19, or the like, to bus widths corresponding to n bits. By this, it is possible to reduce the scale of the bit structure of the frame buffer 11 and the operation devices 12 and 17 or the like which constitute the noise reducing apparatus 10. Moreover, it is also possible to reduce the bit structure or the bus width of a subsequent circuit for receiving the output video signal $S_{out}$ of the noise reducing apparatus 10. Therefore, it is possible to reduce the scales of the noise reducing apparatus 10 and the subsequent circuit, which can realize an increase in processing speed, a control in electricity consumption, a reduction in circuit substrate areal size, a control in manufacturing cost or the like.

Then, by dividing the information about the lower m bits of the return signal $(k \cdot S_d)$ which have been rounded down and including the information in the output video signal $S_{out}$ in the random number addition, it is possible to reflect the information about the lower m bits of the return signal $(k \cdot S_d)$ into the noise reducing process. By this, it is possible to obtain the noise reduction effect with substantially the same accuracy as in the case where the (n+m)-bit return signal $(k \cdot Sd)$ is added to the input video signal $S_n$ without the round-down process. Therefore, if the motion amount of the video image is highly accurately detected by the motion detection device 14 and the detection result is highly accurately reflected into the noise reduction coefficient k, it is possible to reflect this detection result into the output video signal $S_{out}$. Thus, it is possible to realize the noise reducing process which highly accurately responds to the motion of the video image, and to increase the noise reduction effect and the effect of preventing the reduction in video resolution.

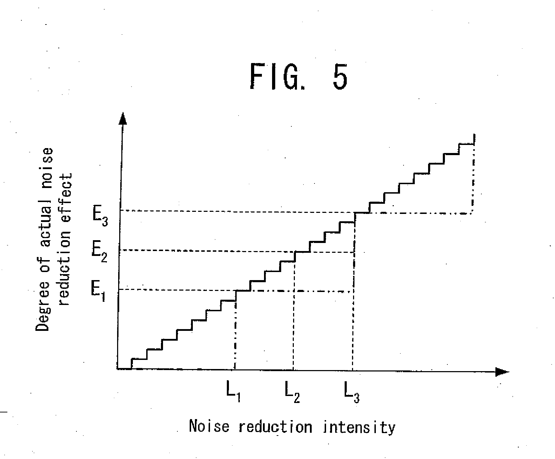

FIG. 5 shows a relationship between noise reduction intensity and degree of an actual noise reduction effect. A solid line in FIG. 5 shows a relationship between the noise reduction intensity and the degree of the actual noise reduction effect, caused by the noise reducing apparatus 10. On the other hand, two-dot chain lines in FIG. 5 show a relationship between the noise reduction intensity and the degree of the actual noise reduction effect, if the lower m bits of the return signal $(k \cdot Sd)$ is simply rounded down without adding the random number thereto. As shown in FIG. 5, if the lower m bits of the return signal $(k \cdot Sd)$ are simply rounded down, the actual noise reduction effect roughly changes, in accordance with the change of the noise reduction intensity In such a rough or large change, it is hardly possible to strike a balance between the reduction of noise and the control of the reduction in video resolution caused by the noise reducing process. For example, even if the noise reduction intensity is changed in a range from L1 to less than L3, the actual noise reduction effect is maintained in E1. However, in E1, noise cannot be sufficiently reduced. Then, if the noise reduction intensity is changed to L3, the actual noise reduction effect becomes E3. However, in E3, the video resolution is reduced. In order to strike a balance between the reduction of noise and the control of the reduction in video resolution caused by the noise reducing process, it is desirable to set the noise reduction intensity such that the actual noise reduction effect is E2; however, this is impossible.

As opposed to this, according to the noise reducing apparatus 10, the actual noise reduction effect minutely changes, in accordance with the change of the noise reduction intensity. In such a minute or small change, it is possible to strike a balance between the reduction of noise and the control of the reduction in video resolution. For example, if the noise reduction intensity is set to L2, the actual noise reduction effect becomes E2. By this, it is possible to sufficiently reduce noise, and to control the reduction in video resolution.

Incidentally, the frame buffer 11, the operation device 12, and the signal processing device 13 are a specific example of the signal processing device and the signal processing process. The random number addition device 15 is a specific example of the random number adding device and the random number adding process. The round-down device 16 is a specific example of the rounding-down device and the rounding-down process. The motion detection device 14 is a specific example of the motion detecting device. The return signal is a specific example of the intermediate signal.

(Second Embodiment)

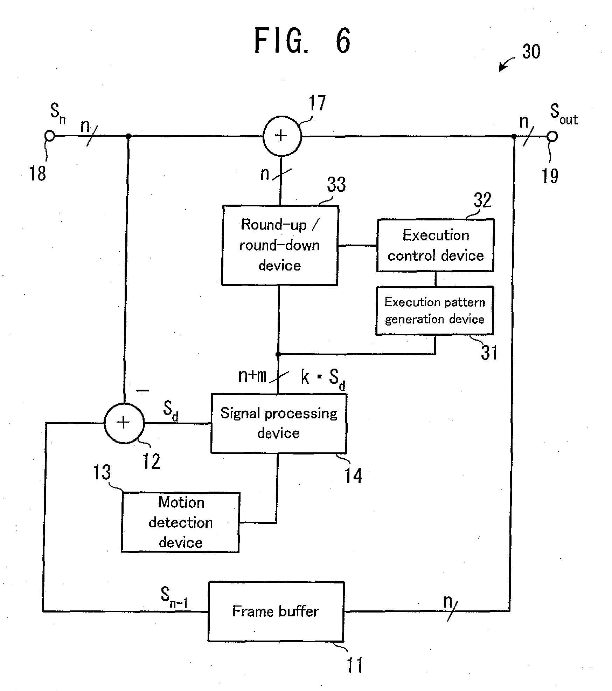

FIG. 6 shows a noise reducing apparatus which is the second embodiment of the present invention. A noise reducing apparatus 30 is the frame recursive type noise reducing apparatus and an apparatus for reducing noise included in a video signal by using a correlation between the frames of the video signal. The noise reducing apparatus 30 is provided with: the frame buffer 11; the operation devices 12 and 17; the motion detection device 13; the signal processing device 14; an execution pattern generation device 31; an execution control device 32; and a round-down / round-up device 33. Each of the execution pattern generation device 31, the execution control device 32, and the round-up / round-down device 33 is constructed from a processing unit and a storage element or the like.

A flow of the noise reproducing process of the noise reducing apparatus 30 is as follows. Namely, a video signal $S_{n-1}$ in a previous frame (i.e., a frame which is one frame prior to a current frame) is stored in the frame buffer 11. This video signal $S_{n-1}$ is an n-bit digital signal. Now, if an input video signal $S_n$ in the current frame, which is an n-bit digital signal, is inputted to the input terminal 18, the operation device 12 performs the subtraction of the input video signal $S_n$ and the video signal $S_{n-1}$, and outputs an n-bit difference signal $S_d$ obtained by the subtraction to the signal processing device 14. On the other hand, the motion detection device 13 detects the motion amount of a video image corresponding to the video signal, and outputs a control signal which indicates the motion amount to the signal processing device 14. The signal processing device 14 sets a noise reduction coefficient k according to the motion amount of the video image, on the basis of the control signal outputted from the motion detection device 13. Moreover, the signal processing device 14 multiplies the difference signal $S_d$ by the noise reduction coefficient k, and outputs a return signal (k • Sd) obtained by the multiplication to the execution pattern generating device 31 and the round-up / round-down device 33. The multiplication of the difference signal $S_d$ and the noise reduction coefficient k, performed in the signal processing device 14, increases the number of bits of the return signal $(k \cdot S_d)$, to be (n+m) bits. Then, the execution pattern generating device 31 generates the execution pattern of a round-up process and a round-down process, on the basis of the value of the lower m bits of the return signal (k • $S_d$). Then, execution control device 32 outputs a selection command signal which indicates which of the round-up process and the round-down process is to be performed in accordance with the execution pattern, to the round-up / round-down device 33. The round-up / round-down device 33 selectively performs either the round-up process or the round-down process for the lower m bits of the return signal (k $\cdot S_d$) outputted from the signal processing device 14, in accordance with the selection command signal. By this, the number of bits of the return signal (k • $S_d$) is converted from (n+m) bits to n bits. Then, the operation device 17 adds the n-bit return signal $(k \cdot S_d)$ outputted from the round-up / round-down device 33 and the n-bit input video signal $S_n$, and outputs the n-bit signal obtained by the addition, as an output video signal $S_{out}$, to the output terminal 19 and the frame buffer 11. The frame buffer 11 stores therein the n-bit output video signal $S_{out}$. The above-mentioned noise reducing process is expressed by the above-mentioned equation (I).

The noise reducing apparatus 30 repeats the noise reducing process for the input video signal $S_n$ in the current frame, for each pixel. If the signal processing for the input video signal $S_n$ in the current frame is ended, then, the noise reducing apparatus 30 performs the same noise reducing process for an input video signal in a next frame. In this manner, the noise reducing apparatus 30 repeats the noise reducing process over a plurality of frames which constitute the input video signal $S_n$. By repeating such a noise reducing process, the addition (feedback) of the return signal (k $\cdot$ Sd) to the input video signal $S_n$ is repeated over the plurality of frames, to thereby reduce the noise included in the input video signal $S_n$.

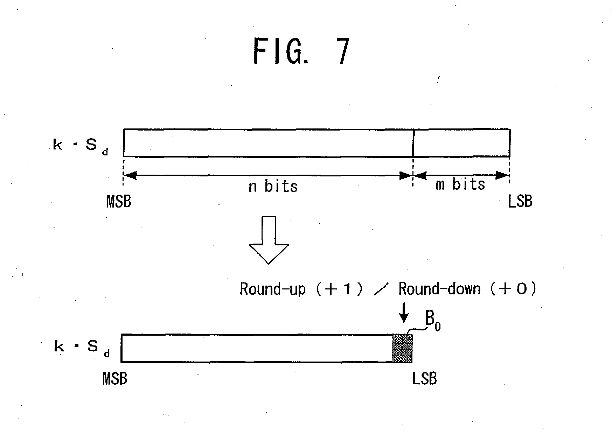

FIG. 7 shows the process of the execution pattern generation device 31, the execution control device 32, and the round-down / round-up device 33. If the noise reducing process is repeatedly performed over the plurality of frames which constitute the input video signal $S_n$, the noise reducing process is repeated for the same pixel. Namely, the noise reducing process is repeatedly performed for the same pixel. Every time the noise reducing process is performed for the same pixel, the round-down / round-up device 33 selectively performs either the round-up process or the round-down process. The round-down / round-up device 33 selects either the round-up process or the round-down process, in accordance with the execution pattern generated by the execution pattern generation device 31. The execution pattern is a pattern to determine whether the round-up process is to be performed or the round-down process is to be performed, every time the noise reducing process is performed for the same pixel. Namely, the execution pattern is to determine the number of times of the round-up process, the number of times of the round-down process, and the order of execution of the round-up process and the round-down process, for each pixel.

The execution pattern is generated by the execution pattern generation device 31. In generating the execution pattern, the execution pattern generation device 31 determines a ratio of the number of times of execution of the round-up process and the number of times of execution of the round-down process in the execution pattern, such that the ratio varies depending on a numerical value shown by the lower m bits of the (n+m)-bit return signal (k • Sd). Specifically, the execution pattern generation device 31 determines the ratio of the number of times of execution of the round-up process and the number of times of execution of the round-down process in the execution pattern such that the round-up process is performed at a frequency which is substantially in proportion to the value of the lower m bits of the return signal (k

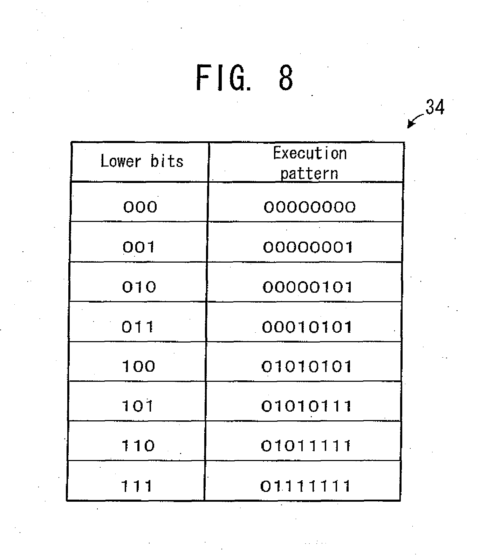

$\cdot S_d$), for the same pixel. For example, the execution pattern generation device 31 generates the execution pattern by referring to an execution pattern table 34 shown in FIG. 8. FIG. 8 shows one example of the case where the lower bits of the return signal ($k \cdot S_d$), which is the target of the round-up process and the round-down process, are three bits. "0" in the execution pattern means the round-down process, and "1" means the round-up process. For example, the lower three bits of the return signal ($k \cdot S_d$) are "000", an execution pattern of "00000000" is generated. This means that the round-down process is to be continuously performed eight times for the same pixel. Moreover, if the lower three bits of the return signal ($k \cdot Sd$) are "001", an execution pattern of "00000001" is generated. This means that the round-down process is to be performed seven times before the round-up process is performed once, for the same pixel. Moreover, if the lower three bits of the return signal ($k \cdot S_d$) are "111", an execution pattern of "01111111" is generated. This means that the round-down process is to be performed once before the round-up process is performed seven times, for the same pixel.

The selective execution of the round-up process and the round-down process according to the execution pattern is controlled by the execution control device 32. The execution control device 32 generates the selection command signal which indicates which of the round-up process and the round-down process is to be performed, in accordance with the execution pattern generated by the execution pattern generation device 31, and outputs the selection command signal to the round-up / round-down device 33. For example, the execution control device 32 holds the execution pattern generated by the execution pattern generation device 31, while the value of the lower m bits of the return signal ($k \cdot Sd$) is maintained in a constant value, for the same pixel. Then, the execution control device 32 counts the number of times of the noise reducing process, performed while the value of the lower m bits of the return signal ($k \cdot S_d$) is maintained in the constant value. Then, the execution control device 32 compares the execution pattern with the count value, for the same pixel, determines which of the round-up process and the round-down process is to be performed, and generates the selection command signal which indicates the determination result. Then, the execution control device 32 outputs the selection command signal to the round-up / round-down device 33 every time the noise reducing process is performed for the same pixel.

The round-up / round-down device 33 selects and performs one of the round-up process and the round-down process, in accordance with the selection command signal, every time the noise reducing process is performed for the same pixel. By this, the round-up process is performed at a frequency which is substantially in proportion to the value of the lower m bits of the return signal ($k \cdot S_d$), for the same pixel. Namely, as shown in FIG. 7, 1 is added to a bit Bo which is the lowest bit of the return signal ($k \cdot Sd$) obtained after the lower m bits are rounded down, at the frequency which is substantially in proportion to the value of the lower m bits of the return signal ($k \cdot S_d$). By this, information about the lower m bits of the return signal ($k \cdot Sd$) is divided in a time direction and added (fed back) to the input video signal $S_n$, for the same pixel. Therefore, after the addition (feedback) of the return signal ($k \cdot S_d$) to the input video signal $S_n$ is repeated for the same pixel, information about the lower m bits of the return signal ($k \cdot S_d$) which have been rounded down is included in the output video signal $S_{out}$. As a result, the information about the lower m bits of the return signal ($k \cdot S_d$) which have been rounded down is reflected into the noise reducing process. Thus, although the return signal ($k \cdot S_d$) is rounded down to n bits and added to the input video signal $S_n$, it is possible to obtain the noise reduction effect with substantially the same accuracy as in the case where the (n+m)-bit return signal ($k \cdot Sd$) is added to the input video signal $S_n$ without rounding.

Incidentally, in order to divide the information about the lower m bits of the return signal ($k \cdot Sd$) in the time direction and add the information, it is desirable to perform the round-up process, for the same pixel, at the frequency which is substantially in proportion to the value of the lower m bits of the return signal ($k \cdot S_d$). In order to do so, it is desirable to perform a series of the round-up process and the round-down process according to the execution pattern, for the same pixel. For that, it is desirable to maintain the value of the lower m bits of the return signal ($k \cdot S_d$) in the constant value, for the same pixel, while a series of the round-up process and the round-down process according to the execution pattern is performed for the same pixel. However, even if the value of the lower m bits of the return signal ($k \cdot S_d$) for the same pixel is changed before a series of the round-up process and the round-down process according to the execution pattern is performed for the same pixel, a part of the information about the lower m bits of the return signal ($k \cdot Sd$) is added to the input video signal $S_n$, so that it is possible to reflect the part of the information about the lower m bits of the return signal ($k \cdot S_d$) into the noise reducing process.

As explained above, the noise reducing apparatus 30 selectively performs either the round-up process or the round-down process for the lower m bits of the return signal ($k \cdot S_d$), in accordance with the value of the lower m bits of the return signal ($k \cdot S_d$). Namely, the noise reducing apparatus 30 performs the round-up process for the lower m bits of the return signal ($k \cdot S_d$), at the frequency corresponding to the value of the lower m bits of the return signal ($k \cdot S_d$). By this, while the number of bits of the return signal ($k \cdot S_d$) is reduced from (n+m) bits to n bits, it is possible to divide the information about the lower m bits of the return signal ($k \cdot S_d$) which have been rounded down, in the time direction, and to include the information in the output video signal $S_{out}$. Thus, according to the noise reducing apparatus 30, the following two effects can be realized, simultaneously. Firstly, by rounding down the lower m bits of the return signal ($k \cdot Sd$) and reducing the number of bits of the return signal ($k \cdot S_d$), it is possible to narrow the bus width of a most part in the noise reducing apparatus 30. By this, it is possible to reduce the scales of the noise reducing apparatus 30 and the subsequent circuit, which can realize an increase in processing speed, a control in electricity consumption, a reduction in circuit substrate areal size, a control in manufacturing cost or the like. Then, by dividing the information about the lower m bits of the return signal (k •Sd) which have been rounded down and including the information in the output video signal $S_{out}$, it is possible to reflect the information about the lower m bits of the return signal (k ·$S_d$) into the noise reducing process. By this, it is possible to realize the noise reducing process which highly accurately responds to the motion of the video image, and to increase the noise reduction effect and the effect of preventing the reduction in video resolution.

Incidentally, the execution pattern generation device 31, the execution control device 32, and the round-down / round-up device 33 are a specific example of the bit-number converting device, and the execution pattern generation device 31 is a specific example of the execution pattern generating device.

Moreover, in the noise reducing apparatus 30, the execution pattern shown in the execution pattern 34 in FIG. 8 is exemplified. However, the execution pattern is desirably generated on the basis of pseudo-multiple-gradation representing method. For example, it is desirable to generate the execution pattern by using components which constitute a two-gradation dither matrix. To cite one example, the execution pattern is generated by aligning the components which constitute the two-gradation design matrix. Alternatively, it is desirable to generate the execution pattern by using a filter coefficient in an error diffusion method. By generating the execution pattern on the basis of such pseudo-multiple-gradation representing method, it is possible to accurately include the information about the lower m bits of the return signal (k ·$S_d$) into the output video signal $S_{out}$.

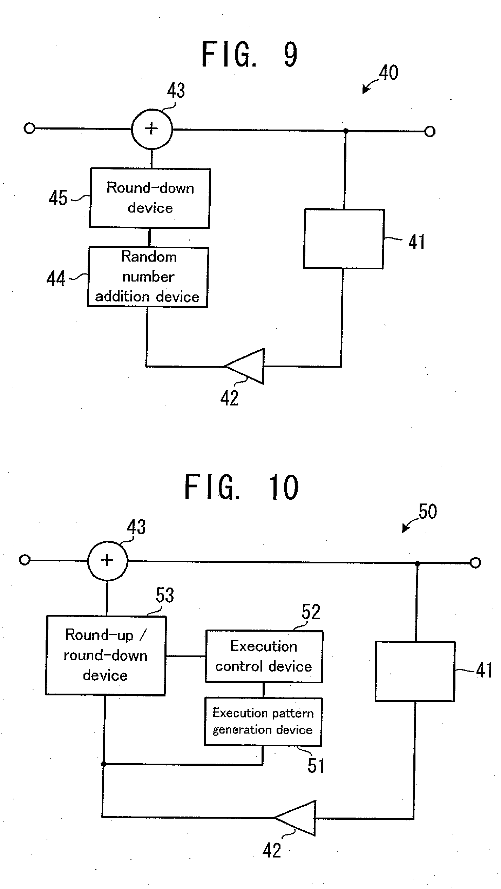

Moreover, the signal processing apparatus of the present invention is not limited to the above-mentioned noise reducing apparatus. Namely, the present invention can be also broadly applied, even to the IIR filter. For example, as shown in FIG. 9, a filter apparatus 40 may be provided with: a delay device 41, such as a delay element, for delaying an output signal; a multiplication device 42 for multiplying the delayed output signal outputted from the delay device 41 by a predetermined coefficient; and an addition device 43 for adding the signal outputted from the multiplication device 42 and an input signal. In the filter apparatus, there may be provided: a random number addition device 44; and a round-down device 45, between the multiplication device 42 and the addition device 43. By this, it is possible to highly accurately reflect an effect to be realized by signal processing, into the signal obtained by the signal processing, while the number of bits of the signal obtained by the signal processing is reduced. Alternatively as in a filter apparatus 50 shown in FIG. 10, there may be provided an execution pattern generation device 51; an execution control device 52; and a round-down / round-up device 53, between the multiplication device 42 and the addition device 43. Even by such construction, it is possible to highly accurately reflect an effect to be realized by signal processing, into the signal obtained by the signal processing, while the number of bits of the signal obtained by the signal processing is reduced.

**Claims**

**1.** A signal processing apparatus (10) **characterized in that** the signal processing apparatus (10) comprises:

a signal processing device (14) for performing signal processing for an n-bit output signal (n is an integer) and for outputting an (n+m)-bit intermediate signal (m is an integer);
a random number adding device (15) for adding a random number which is m bits or less, to the intermediate signal outputted from said signal processing device (14);
a rounding-down device (16) for converting the number of bits of the intermediate signal from (n+m) bits to n bits, by rounding down a lower m bits of the intermediate signal to which the random number is added by said random number adding device (15); and
an adding device (17) for adding the intermediate signal with the number of bits converted by said rounding-down device (16) and an n-bit input signal, and for outputting an n-bit output signal.

**2.** A signal processing apparatus (30) **characterized in that** the signal processing apparatus (30) comprises:

a signal processing device (14) for performing signal processing for an n-bit output signal (n is an integer) and for outputting an (n+m)-bit intermediate signal (m is an integer);
a bit-number converting device (31, 32, 33) for converting the number of bits of the intermediate signal from (n+m) bits to n bits, by selectively performing either a round-up process or a round-down process for a lower m bits of the intermediate signal outputted from said signal processing device (14), in accordance with an execution pattern; and
an adding device (17) for adding the intermediate signal with the number of bits converted by said bit-number converting device (31, 32, 33) and an n-bit input signal, and for outputting an n-bit output signal,
said bit-number converting device (31, 32, 33) comprises an execution pattern generating device (31) for generating the execution pattern to determine whether the round-up process is performed or the round-down process is performed, and

the execution pattern generating device (31) determines a ratio of the number of times of execution of the round-up process and the number of times of execution of the round-down process in the execution pattern, such that the ratio varies depending on a numerical value shown by the lower m bits of the intermediate signal outputted from said signal processing device (14).

3. The signal processing apparatus (10) according to claim 1, **characterized in that** said signal processing device (14) comprises; a delaying device (11) for delaying the output signal; and a multiplying device (14) for multiplying the delayed output signal outputted from the delaying device (11) by a predetermined coefficient, and

said signal processing device (14) and said adding device (17) form a filter.

4. The signal processing apparatus (30) according to claim 2, **characterized in that** said signal processing device (14) comprises: a delaying device (11) for delaying the output signal; and a multiplying device (14) for multiplying the delayed output signal outputted from the delaying device (11) by a predetermined coefficient, and

said signal processing device (14) and said adding device (17) form a filter.

5. The signal processing apparatus (10) according to claim 1, **characterized in that** the output signal is an output video signal, and the input signal is an input video signal, said signal processing device (14) comprises: a storing device (11) for storing therein the output video signal in a frame which is one frame prior to a current frame; a subtracting device (12) for performing subtraction of the output video signal outputted from the storing device and the input video signal, to thereby output a difference signal; and a multiplying device (14) for multiplying the difference signal by a noise reduction coefficient, and

said signal processing device (14) and said adding device (17) form a noise reducing device for performing noise reduction for the input video signal.

6. The signal processing apparatus (30) according to claim 2, **characterized in that** the output signal is an output video signal, and the input signal is an input video signal, said signal processing device (14) comprises: a storing device (11) for storing therein the output video signal in a frame which is one frame prior to a current frame; a subtracting device (12) for performing subtraction of the output video signal outputted from the storing device and the input video signal, to thereby output a difference signal; and a multiplying device (14) for multiplying the difference signal by a noise reduction coefficient, and

said signal processing device (14) and said adding device (17) form a noise reducing device for performing noise reduction for the input video signal.

7. The signal processing apparatus (10) according to claim 1, **characterized in that** said signal processing device (14) comprises a motion detecting device (13) for detecting a motion of a video image corresponding to the input video signal and for setting the noise reduction coefficient in accordance with a motion amount of the video signal.

8. The signal processing apparatus (30) according to claim 2, **characterized in that** said signal processing device (14) comprises a motion detecting device (13) for detecting a motion of a video image corresponding to the input video signal and for setting the noise reduction coefficient in accordance with a motion amount of the video signal.

9. The signal processing apparatus (30) according to claim 2, **characterized in that** the execution pattern generating device (31) generates the execution pattern in accordance with pseudo-multiple-gradations representing method.

10. The signal processing apparatus (30) according to claim 2, **characterized in that** the execution pattern generating device (31) generates the execution pattern by using components which constitute a two-gradation dither matrix.

11. The signal processing apparatus (30) according to claim 2, **characterized in that** the execution pattern generating device (31) generates the execution pattern by using a filter coefficient in an error diffusion method.

12. A signal processing method **characterized in that** the signal processing method comprises:

a signal processing process of performing signal processing for an n-bit output signal (n is an integer) and of outputting an (n+m)-bit intermediate signal (m is an integer);

a random number adding process of adding a random number which is m bits or less, to the intermediate signal outputted in said signal processing process;

a rounding-down process of converting the number of bits of the intermediate signal from (n+m) bits to n bits, by rounding down a lower m bits of the intermediate signal to which the random number is added in said random number adding process; and

an adding process of adding the intermediate signal with the number of bits converted in said rounding-down process and an n-bit input signal, and of outputting an n-bit output signal.

13. A signal processing method **characterized in that** the signal processing method comprises:

a signal processing process of performing signal processing for an n-bit output signal (n is an integer) and of outputting an (n+m)-bit intermediate signal (m is an integer);

a bit-number converting process of converting the number of bits of the intermediate signal from (n+m) bits to n bits, by selectively performing either a round-up process or a round-down process for a lower m bits of the intermediate signal outputted in said signal processing process, in accordance with an execution pattern; and

an adding process of adding the intermediate signal with the number of bits converted in said bit-number converting process and an n-bit input signal, and of outputting an n-bit output signal,

said bit-number converting process comprises an execution pattern generating process of generating the execution pattern to determine whether the round-up process is performed or the round-down process is performed, and

it is determined in the execution pattern generating process that a ratio of the number of times of execution of the round-up process and the number of times of execution of the round-down process in the execution pattern, such that the ratio varies depending on a numerical value shown by the lower m bits of the intermediate signal outputted in said signal processing process.

14. A computer program product in a computer-readable medium for tangibly embodying a program of instructions executable by a computer, to make the computer function as a signal processing apparatus (10), **characterized in that** the signal processing apparatus (10) comprises:

a signal processing device (14) for performing signal processing for an n-bit output signal (n is an integer) and for outputting an (n+m)-bit intermediate signal (m is an integer);

a random number adding device (15) for adding a random number which is m bits or less, to the intermediate signal outputted from said signal processing device (14);

a rounding-down device (16) for converting the number of bits of the intermediate signal from (n+m) bits to n bits, by rounding down a lower m bits of the intermediate signal to which the random number is added by said random number adding device (15); and

an adding device (17) for adding the intermediate signal with the number of bits converted by said rounding-down device (16) and an n-bit input signal, and for outputting an n-bit output signal.

15. A computer program product in a computer-readable medium for tangibly embodying a program of instructions executable by a computer, to make the computer function as a signal processing apparatus (30), **characterized in that** the signal processing apparatus (30) comprises:

a signal processing device (14) for performing signal processing for an n-bit output signal (n is an integer) and for outputting an (n+m)-bit intermediate signal (m is an integer);

a bit-number converting device (31, 32, 33) for converting the number of bits of the intermediate signal from (n+m) bits to n bits, by selectively performing either a round-up process or a round-down process for a lower m bits of the intermediate signal outputted from said signal processing device (14), in accordance with an execution pattern; and

an adding device (17) for adding the intermediate signal with the number of bits converted by said bit-number converting device (31, 32, 33) and an n-bit input signal, and for outputting an n-bit output signal,

said bit-number converting device (31, 32, 33) comprises an execution pattern generating device (31) for generating the execution pattern to determine whether the round-up process is performed or the round-down process is performed, and

the execution pattern generating device (31) determines a ratio of the number of times of execution of the round-up process and the number of times of execution of the round-down process in the execution pattern, such that the ratio varies depending on a numerical value shown by the lower m bits of the intermediate signal outputted from said signal processing device (14).

**16.** A noise reducing apparatus, comprising a signal processing apparatus (10) and performing a noise reducing process by using said signal processing apparatus (10), **characterized in that** the signal processing apparatus (10) comprises:

a signal processing device (14) for performing signal processing for an n-bit output signal (n is an integer) and for outputting an (n+m)-bit intermediate signal (m is an integer);

a random number adding device (15) for adding a random number which is m bits or less, to the intermediate signal outputted from said signal processing device (14);

a rounding-down device (16) for converting the number of bits of the intermediate signal from (n+m) bits to n bits, by rounding down a lower m bits of the intermediate signal to which the random number is added by said random number adding device (15); and

an adding device (17) for adding the intermediate signal with the number of bits converted by said rounding-down device (16) and an n-bit input signal, and for outputting an n-bit output signal.

**17.** A noise reducing apparatus, comprising a signal processing apparatus (30) and performing a noise reducing process by using said signal processing apparatus (30), **characterized in that** the signal processing apparatus (30) comprises:

a signal processing device (14) for performing signal processing for an n-bit output signal (n is an integer) and for outputting an (n+m)-bit intermediate signal (m is an integer);

a bit-number converting device (31, 32, 33) for converting the number of bits of the intermediate signal from (n+m) bits to n bits, by selectively performing either a round-up process or a round-down process for a lower m bits of the intermediate signal outputted from said signal processing device (14), in accordance with an execution pattern; and

an adding device (17) for adding the intermediate signal with the number of bits converted by said bit-number converting device (31, 32, 33) and an n-bit input signal, and for outputting an n-bit output signal,

said bit-number converting device (31, 32, 33) comprises an execution pattern generating device (31) for generating the execution pattern to determine whether the round-up process is performed or the round-down process is performed, and

the execution pattern generating device (31) determines a ratio of the number of times of execution of the round-up process and the number of times of execution of the round-down process in the execution pattern, such that the ratio varies depending on a numerical value shown by the lower m bits of the intermediate signal outputted from said signal processing device (14).

# FIG. 1

# FIG. 2

$k \cdot S_d$

$B_0$

Carry bit present/absent

$S_{rn}$

Random number

n bits

m bits

MSB

LSB

$k \cdot S_d$

$B_0$

MSB

LSB

# FIG. 3

Return-value after change of the number of bits

Return-value before change of the number of bits

# FIG. 4

Return-value after change of the number of bits

Return-value before change of the number of bits

# FIG. 5

# FIG. 6

$\nearrow$ 30

$S_n$ $n$

18

17 $+$

$n$

33

**Round-up / round-down device**

32

**Execution control device**

**Execution pattern generation device**

31

$n+m$ $k \cdot S_d$

$-$

$S_d$ $+$

**Signal processing device**

12

13

14

**Motion detection device**

$n$ $S_{out}$

19

$S_{n-1}$

**Frame buffer**

$n$

11

# FIG. 7

$k \cdot S_d$ □

MSB ← n bits → ← m bits → LSB

⬇

Round-up (+1) / Round-down (+0)

↓ $B_0$

$k \cdot S_d$ □

MSB LSB

# FIG. 8

_34

| Lower bits | Execution pattern |
|------------|-------------------|
| 000 | 00000000 |
| 001 | 00000001 |
| 010 | 00000101 |
| 011 | 00010101 |
| 100 | 01010101 |
| 101 | 01010111 |
| 110 | 01011111 |
| 111 | 01111111 |

# FIG. 9

# FIG. 10